# EUROPEAN PATENT APPLICATION

(11) **EP 1 816 781 A1**
(43) Date of publication of application: **08.08.2007**
(21) Application number: 06125173.2
(22) Date of filing: 30.11.2006
(51) Int. Cl.: H04L 7/00, G04C 11/02, G04G 5/00

(54) **Network terminal device, and timestamp correcting method of the same**

(30) Priority: 02.02.2006 JP 2006025315
(71) Applicant: MURATA KIKAI KABUSHIKI KAISHA, Kyoto (JP)
(72) Inventor: Kataoka, Naoto Murata Kikai Kabushiki Kaisha, Fushimi-ku Kyoto 612-8686 (JP)
(74) Representative: Ackroyd, Robert

(57) **Abstract**

A network terminal device prevents a timestamp from becoming incorrect accompanying a correction of the local time during daylight-saving time. During the daylight-saving time, the local time is moved forward by one hour, and the time zone is also moved forward by one hour. When the daylight-saving time ends, both the local time and the time zone are moved backward by one hour.

## Description

### BACKGROUND OF THE INVENTION

### 1. Field of the Invention

The present invention relates to a network terminal device or the like. In particular, the present invention relates to the adjustment of a clock according to daylight-saving time.

### 2. Description of the Related Art

For saving energy, for example, clocks are moved forward by one hour during daylight-saving time. A timestamp output to a network is based on Greenwich Mean Time (GMT). For example, the time difference between local time and GMT, i.e. a time zone, is described as the timestamp. When the local time is corrected according to the daylight-saving time, the timestamp may deviate by a time shift in the daylight-saving time. For example, when only the local time is moved forward by one hour according to daylight-saving time, the timestamp jumps one hour at the start of the daylight-saving time. When the local time is moved backward by one hour at the end of the daylight-saving time, the order of the timestamps may be reversed.

### SUMMARY OF THE INVENTION

In order to overcome the problems described above, preferred embodiments of the present invention enable an accurate timestamp to be output while outputting a local time corresponding to daylight-saving time. Other preferred embodiments prevent execution of a network protocol from becoming complicated when generating a timestamp. Other preferred embodiments prevent troubles from generating when a manager or the like checks a time zone value. Other preferred embodiments use time data not corresponding to the daylight-saving time, which has been received from a timeserver, to accurately adjust a clock to a local time even during daylight-saving time.

According to an aspect of the present invention, a network terminal device uses a network protocol to transmit or received data and generates a timestamp. The timestamp includes a local time value and a time zone value. The network terminal device includes a daylight-saving time correcting unit. At a start of a daylight-saving time period, the daylight-saving time correcting unit moves the local time value and the time zone value forward according to the daylight-saving time. When the daylight-saving time period ends, the daylight-saving time correcting unit resets the local time value and the time zone value, which have been corrected according to the daylight-saving time, to an original value.

The network terminal device preferably includes a storage unit arranged to store the time zone value. The daylight-saving time correcting unit moves the time zone value stored in the storage unit forward according to the daylight-saving time at the start of the daylight-saving time period. The daylight-saving time correcting unit resets the time zone value stored in the storage unit, which has been corrected according to the daylight-saving time, into an original value at the end of the daylight-saving time period.

The storage unit preferably stores a time zone standard value and a time zone offset value separately. The daylight-saving time correcting unit moves the offset value forward according to the daylight-saving time, and resets the value corrected according to the daylight-saving time to the original value.

The network terminal device preferably includes an adjusting unit. The adjusting unit converts time data, which has been received from a timeserver, into a local time by using the time zone value, and adjusts a clock to the local time.

According to another aspect of the present invention, a timestamp correcting method of a network terminal device uses a network protocol to transmit or receive data and generates a timestamp. The timestamp includes a local time value and a time zone value. At the start of a daylight-saving time period, the local time value and the time zone value are moved forward according to the daylight-saving time. When the daylight-saving time period ends, the local time value and the time zone value, which have been corrected according to the daylight-saving time, are reset to an original value. The network terminal device preferably includes a storage unit for storing a time zone value. At the start of the daylight-saving time period, the time zone value stored in the storage unit is moved forward according to the daylight-saving time. At the end of the daylight-saving time period, the time zone value stored in the storage unit, which has been corrected according to the daylight-saving time, is reset to the original value.

According to the above-described aspect of the present invention, during the daylight-saving time, both the local time value and the time zone value are moved forward, and when the daylight-saving time period ends, the local time value and the time zone value are reset to the original value. That is, the local time is adjusted to a time not corresponding to the daylight-saving time, and the time zone value is reset to the value before the daylight-saving time. As a result, the timestamp output via the network protocol includes a value adjusted according to the daylight saving time for both the local time value and the time zone value during the daylight-saving time. When it is not during the daylight-saving time, the timestamp includes a normal local time value and a normal time zone value. Thus, a normal timestamp is output.

The network protocol may determine whether or not it is presently during daylight-saving time, and the time zone value may be corrected each time when generating a timestamp. However, it involves an excess of work to execute the network protocol in such a manner. Therefore, according to the preferred embodiments of the present invention, the network terminal device stores the time zone value, and moves the time zone value forward at the start of daylight-saving time, and moves the time zone value backward at the end of daylight-saving time. As a result, the network protocol is not required to be aware whether or not it is during the daylight-saving time, and the process is facilitated.

If the stored time zone value is directly corrected, when the manager or the like checks the time zone value of the network terminal device, the manager may judge that the time zone value is incorrect and erroneously correct the time zone value. Therefore, the network terminal device separately stores the time zone standard value a time zone offset value. By correcting the offset value according to the daylight-saving time, a local time value and a normal time zone value corresponding to the daylight-saving time are output. As a result, an erroneous connection may be prevented.

The clock is adjusted to the local time according to the GMT time data received from the timeserver. The time data of the timeserver is a standard time not corresponding to the daylight-saving time. When the local time is corrected according to the time data from the timeserver during the daylight-saving time, an error is generated for a shift of the daylight-saving time. When the time data from the timeserver is corrected by the time zone value and the clock is adjusted to the local time, an error is not generated.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a block diagram illustrating a network terminal device and its usage environment according to a preferred embodiment of the present invention.

Fig. 2 is a block diagram of a clock according to a preferred embodiment of the present invention.

Fig. 3 is a block diagram of a clock processing program according to a preferred embodiment of the present invention.

Fig. 4 illustrates an internal data structure of the clock according to a preferred embodiment of the present invention.

Fig. 5 is a flowchart illustrating a daylight-saving time adjustment according to a preferred embodiment of the present invention.

### DETAILED DESCRIPTION OF PREFERRED EMBODIMENTS

Preferred embodiments of the present invention will be described.

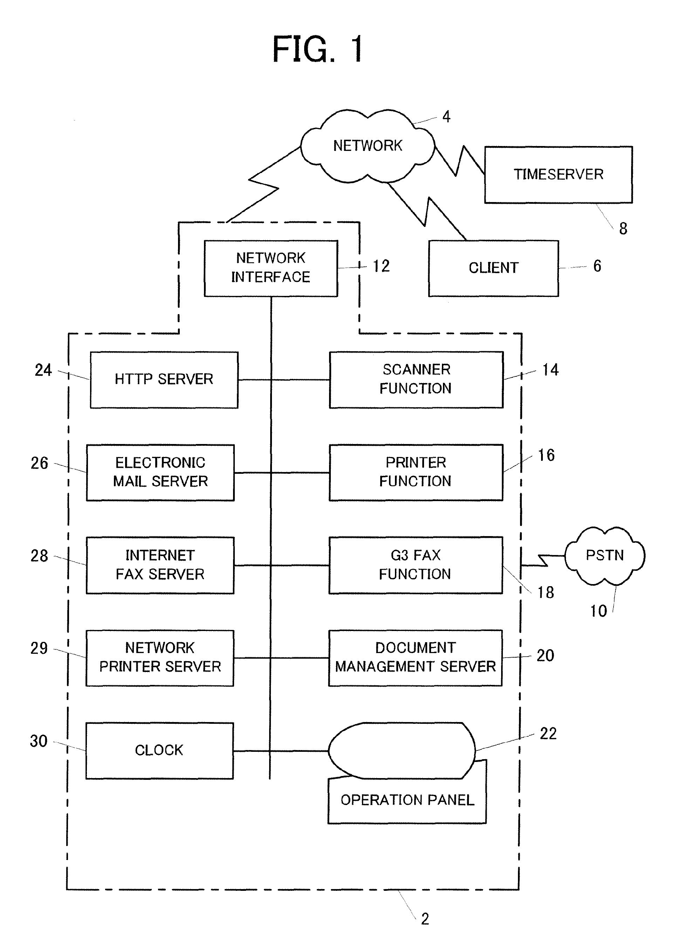

Fig. 1 through Fig. 5 illustrate a network terminal device 2 according to a preferred embodiment of the present invention. The network terminal device 2 is connected to a network 4 such as a Local Area Network (LAN) or the Internet. Reference numeral 6 denotes a client such as a personal computer. Reference numeral 8 denotes a timeserver. The network terminal device 2 includes a G3 fax function processing unit 18, and is connected to a Public Switched Telephone Network (PSTN) 10. The network terminal device 2 is connected to the network 4 via a network interface 12 or the like. A scanner function processing unit 14 scans image data from an original document by monochrome or color. A printer function processing unit 16 prints out the image data by monochrome or color. A document management server 20 manages image data scanned by the scanner function processing unit 14, image data received by the G3 fax function processing unit 18, or data received from the network interface 12, or the like. An operation panel 22 includes a combination of a Liquid Crystal Display (LCD) and a touch-screen or the like. A user operates the operation panel 22 to operate the network terminal device 2 and to correct a local time value and a time zone value or the like stored in a clock 30.

The network terminal device 2 includes servers using a network protocol, such as a Hyper Text Transfer Protocol (HTTP) server 24, an electronic mail server 26, an Internet fax server 28, and a network printer server 29. The network terminal device 2 prints out image data received via the network interface 12 by the printer function processing unit 16. The clock 30 stores a local time value, a time zone value, and an offset value of the daylight-saving time. The clock 30 outputs a timestamp. The sum of the time zone value and the offset value (for time other than daylight-saving time, the offset value is "0"; during daylight-saving time, the offset value has a value according to the time shift caused by the daylight-saving time) will be referred to as a corrected time zone value. The timestamp is added when the HTTP server 24 transmits a webpage. Alternatively, the timestamp is added to data when the electronic mail server 26 transmits and/or receives electronic mail, or when the Internet fax server 28 transmits and/or receives an Internet fax. The timestamp may be printed out when carrying out a printing operation by the printer function processing unit 16, or the timestamp may be added to historic information. The timestamp may be added to image data scanned by the scanner function processing unit 14. Alternatively, the timestamp may be added to fax data transmitted or received by the G3 fax function processing unit 18.

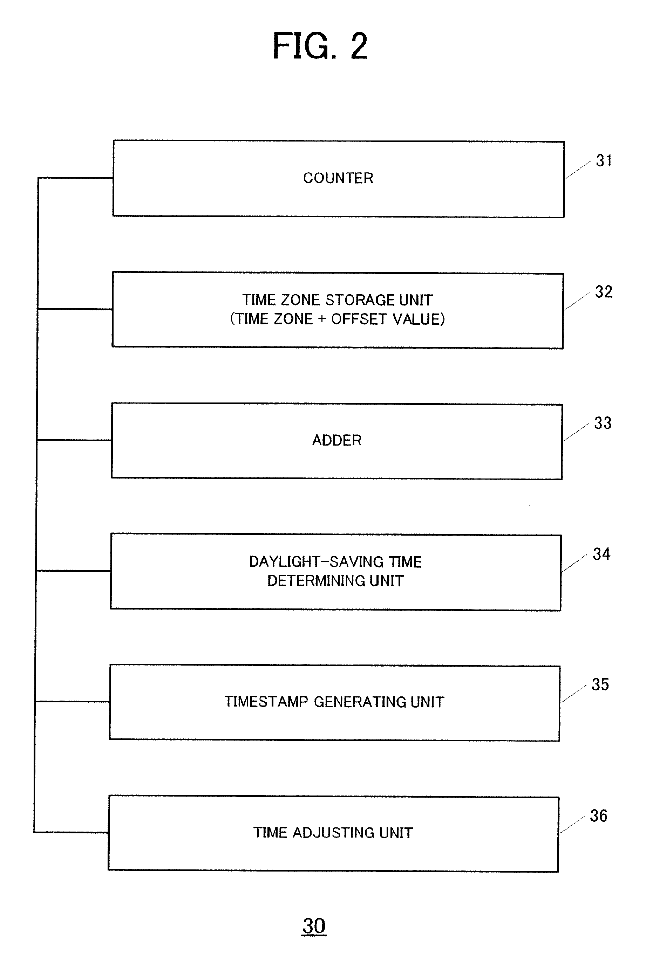

Fig. 2 illustrates a structure of the clock 30. A counter 31 counts data to generate time, and converts the counted data into a local time. A time zone storage unit 32 stores a time zone value and its offset value. The time zone storage unit 32 may also store the corrected time zone value. An adder 33 calculates and outputs the sum of the offset value and the time zone value each time, or stores the sum as the corrected time zone value. Further, when the adder 33 stores the corrected time zone value, this value may be set such that the value cannot be changed unless a person has a special authority. A daylight-saving time determining unit 34 determines whether or not it is during the daylight-saving time based on the local time value and the corrected time zone value. In particular, at the start and the end of the daylight-saving time period, the daylight-saving time determining unit 34 outputs a change signal for each of the local time value and the offset value (a signal for moving forward and a signal for moving backward each of the local time value and the offset value by the shift of the daylight-saving time). A timestamp generating unit 35 generates a timestamp from two data, i.e., the local time value and the corrected time zone value, which is calculated by adding the offset value to the time zone value. A clock adjusting unit 36 adjusts the local time of the counter 31 by using the time data from the timeserver 8 and the time zone value and the offset value stored in the time zone storage unit 32, i.e., the corrected time zone value.

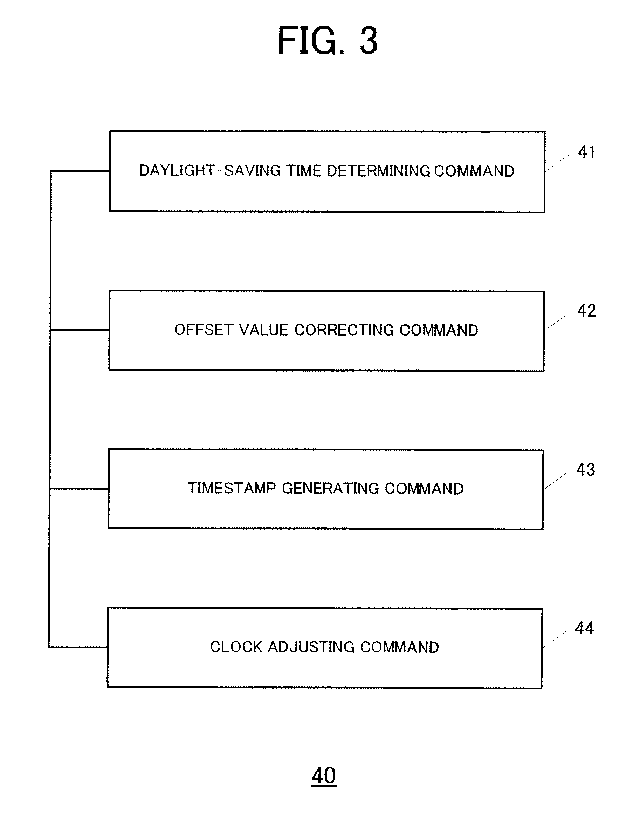

Fig. 3 illustrates a timestamp correcting program 40. A daylight-saving time determining command 41 uses a counter value of the clock 30 of the network terminal device 2 to determine whether or not it is presently during daylight-saving time. In particular, at the start and the end of daylight-saving time, the daylight-saving time determining command 41 outputs a signal. An offset value correcting command 42 adds a shift for the daylight-saving time to the offset value at the start of the daylight-saving time, and subtracts the shift for the daylight-saving time from the offset value at the end of the daylight-saving time. Under the same timing, the offset value correcting command 42 moves the local time value forward or backward by the shift for daylight-saving time at the start or the end of the daylight-saving time period. A timestamp generating command 43 generates a timestamp including the local time, and the corrected time zone, which is a sum of the time zone value and the offset value. A clock adjusting command 44 adjusts the clock 30 to the local time with respect to the time data received from the timeserver 8 by the stored time zone value, particularly, the corrected time zone value.

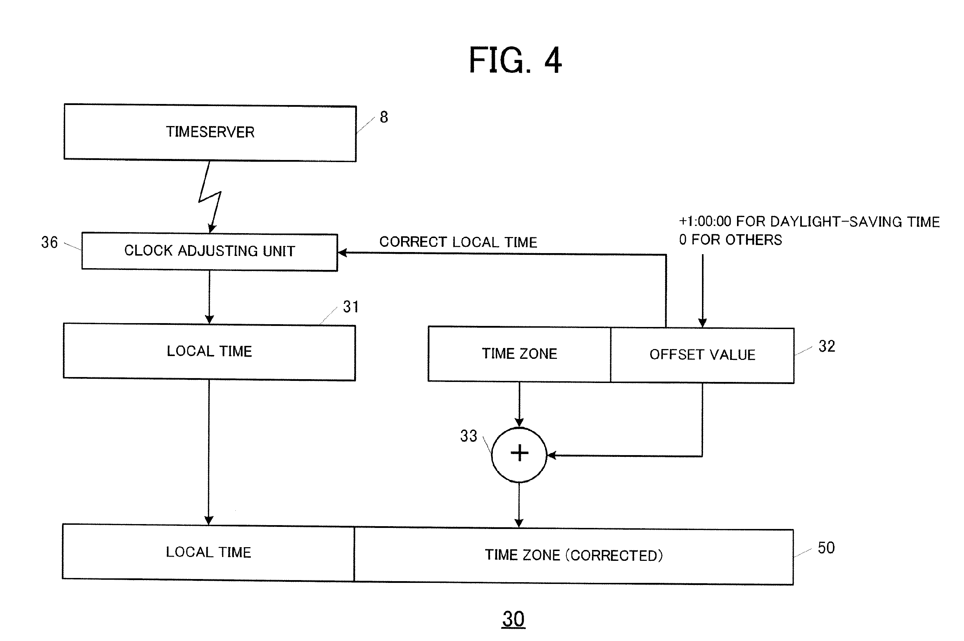

Fig. 4 illustrates a mechanism for generating a timestamp 50. The time zone storage unit 32 stores a time zone value and an offset value. For example, when the shift for daylight-saving time is one hour, the offset value is "+1:00:00" during daylight-saving time, and "0" at other times. The corrected time zone value is the sum of the time zone value and the offset value added by the adder 33. The counter 31 generates a local time, and the generated local time is also used as a portion of the timestamp 50. When adjusting by using the timeserver 8, the clock adjusting unit 36 uses the offset value to correct a conversion value from the time data of the timeserver 8 to the local time by a shift of the daylight-saving time. That is, during the daylight-saving time, the local time is moved forward with respect to the time data of the timeserver 8 by e.g. one hour.

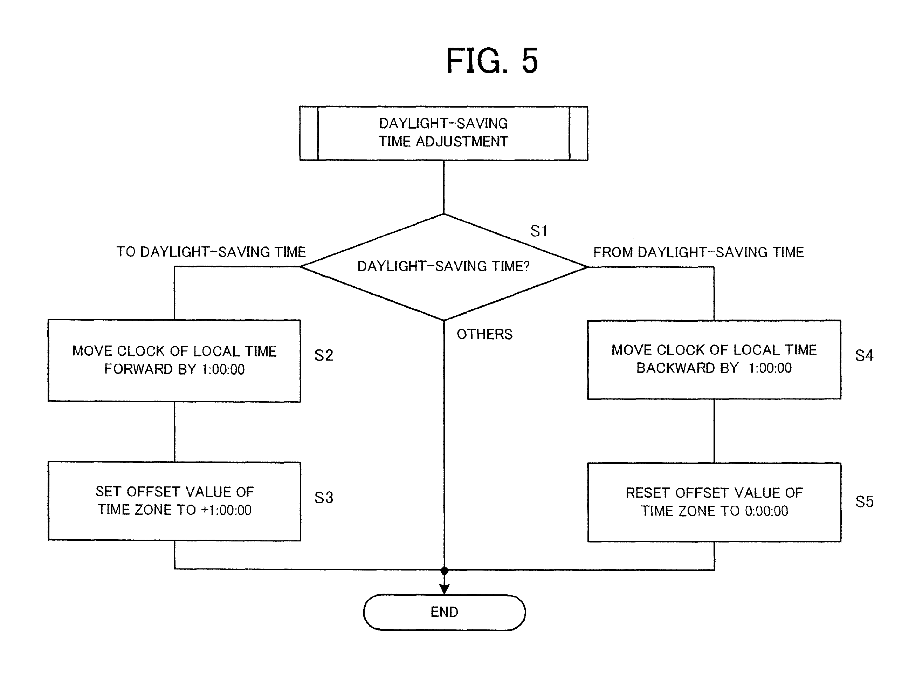

Fig. 5 illustrates an algorithm for adjusting daylight-saving time. First, a determination is made as to whether one is proceeding into daylight-saving time, or returning from daylight-saving time (step S1). When proceeding into daylight-saving time, the clock of the local time is moved forward by the shift of the daylight-saving time (step S2). The offset value of the time zone is also moved forward by the shift of the daylight-saving time (step S3). When it is a return from daylight-saving time, the clock of the local time is delayed by the shift of the daylight-saving time (step S4). The offset value of the time zone is also moved backward by the shift of the daylight-saving time, i.e., reset to "0" (step S5).

In the present preferred embodiment, the time zone value and the offset value are separately stored. A user or a manager or the like can correct the time zone value by operating the operation panel 22 or the like. The offset value is not output to the operation panel 22 or the like, or even when the offset value is output to the operation panel 22 or the like, only an authorized person is permitted to correct the offset value. Therefore, even when the manager or the like checks the local time value or the time zone value during the daylight-saving time, the time zone value does not take an unnatural value and is not corrected erroneously. When the clock is adjusted to the local time by using the time data of the timeserver 8, the conversion value from the time data of the timeserver 8 to the local time is shifted by using the offset value. Therefore, the clock can be adjusted to a correct local time both during daylight-saving time and not during daylight-saving time.

Instead of separately storing the time zone value and the offset value, only a corrected time zone value, which is a sum of the time zone value and the offset value, may be stored. However, in such a case, if the manager or the like is permitted to correct the time zone value, the stored value may be erroneously interrupted as an incorrect value during daylight-saving time. Instead of correcting the time zone value, the clock 30 may store only the local time. Then, the local time may be moved forward during daylight-saving time, and the HTTP server 24 through the Internet fax server 28 or the like may execute a process for generating a timestamp. In this case, each of the servers 24 to 28 determines whether or not it is presently during daylight-saving time. When it is during daylight-saving time, the time zone value is moved forward by a shift of the daylight-saving time. However, in such a case, the servers 24 to 28 are required to manage the generation of the timestamp. Thus, the process may be troublesome.

The present preferred embodiment has been described with reference to an example of a Multi Function Peripheral (MFP) including the Internet fax server 28, the scanner function 14, and the printer function 16. Alternatively, the MFP may transmit or receive data to or from a network via a network protocol, and generate a timestamp. Moreover, in a network printer or the like, when historic information stored in a log file or the like includes a timestamp, the MFP may be used for generating the timestamp.

While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the scope of the present invention.

## Claims

1. A network terminal device comprising:
a transmission/reception unit which transmits or receives data using a network protocol;
a clocking unit which generates a timestamp to be applied to the data transmitted or the data received by the transmission/reception unit, wherein the timestamp includes a local time value and a time zone value; and
a daylight-saving time correcting unit which changes the local time value and the time zone value according to the daylight-saving time at the start of a daylight-saving time period, and returns the local time value and the time zone value, which have been corrected according to the daylight-saving time, to an original value at the end of the daylight-saving time period.

2. A network terminal device according to claim 1, including a storage unit which stores the time zone value, wherein at the start of the daylight-saving time period, the daylight-saving time correcting unit changes the time zone value stored in the storage unit according to the daylight-saving time, and at the end of the daylight-saving time period, the daylight-saving time correcting unit returns the time zone value stored in the storage unit, which has been corrected according to the daylight-saving time, to the original value.

3. A network terminal device according to claim 1, including a storage unit which separately stores a time zone standard value and a time zone offset value, wherein at the start of the daylight-saving time period, the daylight-saving time correcting unit changes the offset value stored in the storage unit according to the daylight-saving time, and at the end of the daylight-saving time period, the daylight-saving time correcting unit returns the offset value stored in the storage unit, which has been corrected according to the daylight-saving time, to the original value.

4. A network terminal device, which uses a network protocol to transmit or received data and generates a timestamp, the network terminal device comprising:
means for correcting, wherein the timestamp includes a local time value and a time zone value, the means for correcting moving forward the local time value and the time zone value according to a daylight-saving time during a daylight-saving time period, and moving backward the local time value and the time zone value, which have been corrected according to the daylight-saving time, to an original value at an end of the daylight-saving time period.

5. A network terminal device according to claim 4, including a storage unit which stores the time zone value, wherein at the start of the daylight-saving time period, the means for correcting moves forward the time zone value stored in the storage unit according to the daylight-saving time, and at the end of the daylight-saving time period, the means for correcting moves backward the time zone value stored in the storage unit, which has been corrected according to the daylight-saving time, to the original value.

6. A network terminal device according to claim 5, wherein the storage unit separately stores a time zone standard value and a time zone offset value, and the means for correcting moves forward the offset value according to the daylight-saving time, and moves backward the offset value, which has been corrected according to the daylight-saving time, to the original value.

7. A network terminal device according to claim 4, 5 or 6, including means for adjusting a clock to a local time by converting time data received from a timeserver into the local time by using the time zone value.

8. A timestamp correcting method of a network terminal device, which uses a network protocol to transmit or receive data and generates a timestamp, the timestamp correcting method comprising the steps of;
moving forward a local time value and a time zone value according to a daylight-saving time during a daylight-saving time period, and moving backward the local time value and the time zone value, which have been corrected according to the daylight-saving time, to an original value at an end of the daylight-saving time period, wherein the timestamp includes the local time value and the time zone value.

9. The timestamp correcting method according to claim 8, including the steps of:
providing a storage unit arranged to store the time zone value;
moving forward the time zone value stored in the storage unit according to the daylight-saving time at a start of the daylight-saving time period; and
moving backward the time zone value stored in the storage unit, which has been corrected according to the daylight-saving time, to the original value at the end of the daylight-saving time period.
